# FASCICULE DE BREVET EUROPEEN

(11) **EP 0 519 837 B1**
(45) Date de publication et mention de la délivrance du brevet: **08.05.1996**
(21) Numéro de dépôt: 92401730.4
(22) Date de dépôt: 19.06.1992
(51) Int. Cl.: C08L 23/04, C08L 23/10, C08J 5/18

(54) **Compositions contenant des copolymères d'éthylène et films obtenus**
Äthylenkopolymere enthaltende Zusammensetzungen und Filme daraus
Compositions containing ethylene coplymers and films thereof

(30) Priorité: 21.06.1991 FR 9107681
(43) Date de publication de la demande: 23.12.1992
(73) Titulaire: ECP ENICHEM POLYMERES FRANCE, F-92411 Courbevoie (FR)
(72) Inventeur: Valligny, Dominique, F-59000 Lille (FR); Piecuch, Edouard, F-62660 Beuvry-les-Bethune (FR)
(74) Mandataire: Chaillot, Geneviève

(56) Documents cités:
- EP-A- 0 052 557
- EP-A- 0 321 220
- EP-A- 0 397 517
- US-A- 4 643 945

## Description

La présente invention concerne des compositions transformables en films, à base de copolymères d'éthylène, et les films qu'elles permettent d'obtenir.

Il est connu de transformer en films les copolymères d'éthylène et d'au moins une alpha-oléfine, par exemple par extrusion-soufflage de gaine, et d'utiliser lesdits films dans le domaine de l'ensachage automatique. Les performances exigées des films dans ce domaine particulier sont, avant tout, une bonne résistance à chaud des soudures et une température optimale de soudage (celle qui correspond à la résistance maximale à chaud de la soudure) pas trop élevée. Une autre performance intéressante des films dans ce domaine est une plage de soudabilité pas trop étroite, c'est-à-dire la possibilité de réaliser une soudure possédant, par exemple, 80% de la résistance maximale qu'il est possible d'obtenir, dans une plage de températures d'environ 15 à 20°C. Cette caractéristique est pratiquement recherchée car elle permet de s'affranchir des légères variations de température, par rapport à la température optimale, dont l'appareil de soudage utilisé pourrait être le siège.

Par la demande de brevet européen EP-A-321 220, on connaît un film d'une composition ternaire d'un polyéthylène basse densité, de cristallinité supérieure à 40%, de polypropylène et d'un copolymère éthylène-α-oléfine de faible cristallunité ou sensiblement amorphe, ce film pouvant être thermosoudé à une feuille de polypropylène notamment, avec séparation aisée de la feuille et du film par application d'une force de pelage.

Il est connu que les films de copolymères d'éthylène et d'au moins une alpha-oléfine, qui possèdent par ailleurs de bonnes propriétés mécaniques, présentent une résistance à chaud des soudures supérieure à celle des films de polyéthylène obtenu par voie radicalaire. Ils présentent par ailleurs une plage de soudabilité large et une température optimale de soudage pas trop élevée.

On a cherché à modifier ces copolymères en vue de conférer aux films les comprenant une valeur encore plus élevée de la résistance à chaud des soudures, permettant par exemple l'ensachage de produits plus denses, tout en maintenant la température optimale de soudage voisine de celle des films de copolymères non modifiés. Il était par ailleurs souhaitable de ne pas diminuer de façon rédhibitoire les bonnes propriétés mécaniques des films de copolymères non modifiés.

On a maintenant trouvé que ce problème pouvait être résolu en ajoutant aux copolymères d'éthylène et d'au moins une alpha-oléfine, un copolymère cristallin sélectionné de propylène et d'éthylène, dans des proportions déterminées.

La présente invention a pour premier objet des compositions transformables en films consistant en, d'une part, 50 à 93% en poids d'au moins un copolymère (E) d'éthylène et d'au moins une alpha-oléfine, ayant une densité comprise entre 0,880 et 0,940 et, d'autre part, 7 à 50% en poids d'au moins un copolymère cristallin (P) de propylène et d'éthylène ayant une teneur en motifs dérivés du propylène d'au moins 80% en moles et un indice de fluidité (à 230°C sous 2,16 kg) compris entre 1 et 20 dg/min.

L'alpha-oléfine utilisée pour préparer le copolymère (E) possède avantageusement de 3 à 12 atomes de carbone, de préférence de 3 à 8 atomes de carbone. Elle est par exemple choisie parmi le propylène, le butène-1, l'hexène-1, la méthyl-4-pentène-1, l'octène-1 et leurs mélanges.

La densité des copolymères (E), mesurée selon la norme ASTM D-1505, est avantageusement comprise entre 0,885 et 0,930, de préférence, entre 0,890 et 0,915. Leur indice de fluidité standard (mesuré selon la norme ASTM D-1238 condition E) est avantageusement compris entre 0,3 et 4 dg/min.

Les copolymères (E) sont préparés par copolymérisation de l'éthylène et d'au moins une des alpha-oléfines mentionnées ci-dessus en présence de systèmes catalytiques de type Ziegler, en solution, en émulsion, en phase gazeuse ou à l'état hypercritique. On utilise avantageusement des copolymères (E) obtenus selon un procédé consistant à copolymériser l'éthylène et au moins une alpha-oléfine à une température comprise entre 180 et 300°C environ sous une pression comprise entre 300 et 2500 bars environ, de préférence selon un mode continu, le temps de séjour du système catalytique dans le réacteur de copolymérisation étant compris entre 1 et 150 secondes. La teneur du flux gazeux en comonomère est ajustée en fonction de la nature de ce dernier et de la densité souhaitée pour le copolymère. Ainsi, pour obtenir les copolymères (E), on polymérise un flux gazeux contenant de 30 à 50% en poids environ d'éthylène et de 50 à 70% de comonomère(s). On utilise comme catalyseur, avantageusement, un de ceux décrits dans le brevet européen n° 32 339. On peut opérer en présence de jusqu'à 2% en moles d'un agent de transfert, tel que l'hydrogène, de façon à obtenir l'indice de fluidité souhaité.

Le copolymère cristallin (P) possède avantageusement une densité comprise entre 0,89 et 0,91, un taux de cristallinité (mesuré par diffraction des rayons X) d'au moins 40% environ. Son indice de fluidité (mesuré à 230°C, sous 2,16 kg, selon la norme ASTM D-1238 condition L) est avantageusement compris entre 3 et 20 dg/min., de préférence entre 6 et 20 dg/min., encore de préférence, entre 6 et 16 dg/min. Le copolymère (P) peut être obtenu par copolymérisation de propylène et d'éthylène en présence de catalyseurs de type Ziegler stéréospécifiques, par exemple en suspension dans un solvant ou en phase liquide.

Le copolymère cristallin (P) peut être isotactique ou syndiotactique. Il peut s'agir d'un copolymère statistique ou bien d'un copolymère à blocs. On choisira avantageusement un copolymère isotactique, statistique contenant de 85 à 99%, de préférence de 90 à 99%, en moles de motifs propylène et de 1 à 15%, de préférence de 1 à 10%, en moles de motifs éthylène, dont le point de fusion J (mesuré par analyse enthalpique différentielle selon la norme NFT-51223) est compris entre 130 et 150°C, de préférence entre 130 et 140°C.

La quantité de copolymère (P) ajoutée au copolymère (E) pour préparer les compositions selon l'invention est telle que l'on obtienne, pour les films comprenant ces compositions, le meilleur compromis possible entre les performances de soudage (valeur de la résistance des soudures à chaud, température optimale de soudage, plage de soudabilité) et les caractéristiques mécaniques, particulièrement la résistance à l'impact qui a tendance à diminuer alors que les performances de soudage augmentent de façon très sensible par rapport au copolymère (E) utilisé seul. Les compositions selon l'invention comprennent donc avantageusement de 60 à 90% en poids de copolymère (E), de préférence de 70 à 90%, et respectivement de 10 à 40% en poids de copolymère (P), de préférence de 10 à 30% en poids. Le copolymère (P) a avantageusement un indice de fluidité compris entre 6 et 16 dg/min. Dans ce cas on constate en effet un élargissement de la plage de soudabilité, par rapport à des copolymères (P) d'indice de fluidité plus faible. L'indice de fluidité standard des compositions selon l'invention (mesuré selon la norme ASTM D-1238 condition E) est avantageusement compris entre 0,1 et 3 dg/min.

Les compositions selon l'invention peuvent être préparées selon tout moyen connu de mélange de ses constituants, par exemple par mélange de granulés ou de poudres, puis, le cas échéant, malaxage à l'état fondu de ce mélange, puis regranulation. Les granulés ainsi obtenus trouvent une application dans leur transformation en films.

Un autre objet de la présente invention consiste en des films formés à partir de compositions décrites ci-dessus. L'obtention des films a lieu de façon connue par extrusion des compositions à l'état fondu à l'aide d'une filière plate ou, de préférence, à l'aide d'une filière annulaire et soufflage de gaine. Leur épaisseur, fonction de leur utilisation envisagée, est généralement comprise entre 20 et 200 micromètres.

En addition aux caractéristiques des compositions à l'origine de ces films, ces derniers peuvent être de préférence caractérisés par une ou plusieurs caractéristiques préférentielles suivantes :
- ils possèdent une valeur de la résistance à chaud des soudures (mesurée selon la méthode décrite ci-après) au moins égale à 4 N/15 mm, de préférence au moins égale à 6 N/15 mm,
- ils présentent une température optimale de soudage (pour laquelle la résistance à chaud des soudures atteint une valeur maximale) inférieure ou égale à 120°C, de préférence inférieure ou égale à 110°C,
- ils possèdent une résistance à l'impact (mesurée selon la norme NFT 54019), d'au moins 300 g, de préférence au moins 500 g,
- ils possèdent une résistance au déchirement, déterminée selon la méthode ELMENDORF, d'au moins 250 cN, de préférence au moins 400 cN, dans le sens longitudinal (sens de l'extrusion du film) et d'au moins 400 cN dans le sens transversal ; on préfère les films pour lesquels ces deux valeurs sont équilibrées, c'est-à-dire ne diffèrent pas plus de 10% entre elles.

Dans les exemples donnés ci-après à titre d'illustration non limitative de l'invention, les caractéristiques des copolymères et les résultats des mesures ont été obtenus comme suit :
- les teneurs molaires en motifs constitutifs des polymères : par spectroscopie infra-rouge,
- les densités : selon la norme ASTM D-1505,
- les indices de fluidité : selon la norme ASTM D-1238 dans les conditions :
   E (190°C, 2,16 kg) pour les copolymères (E)
   L (230°C, 2,16 kg) pour les copolymères (P) ;
      ils sont exprimés en dg/min.
- la température de fusion J : par analyse enthalpique différentielle selon la norme NFT-51223, exprimée en °C,
- la résistance à chaud des soudures (RCS), exprimée en N/15 mm, selon la méthode suivante :
   On utilise un appareil dénommé PACK FORSK HOT TACK TESTER en fixant les paramètres comme suit. On a fait varier la température de soudage (température des barres de soudure) de 10°C en 10 °C dans toute la gamme de températures où l'on observe la soudure. On note pour chaque température de mesure la valeur RCS trouvée. La pression des barres de soudure entre lesquelles l'échantillon est placé est fixée à 5 bars, le temps de soudage est de 0,5 s, le délai s'écoulant entre le relâchement des barres de soudure et l'application de la force sur la soudure obtenue est de 0,2 s ; la vitesse de pelage (traction exercée sur la soudure) est de 200 mm/s. Les échantillons de films soumis à cette mesure, découpés dans le sens de l'extrusion, ont pour dimensions 270 x 15 mm ; la section de soudure est de 15 x 5 = 75 mm.
   - la résistance à l'impact RI, selon la norme NFT-54019, exprimée en grammes,
   - la résistance au déchirement RD, dans les sens longitudinal L et transversal T, selon la norme NFT 54141, exprimée en centinewtons (cN).

### EXEMPLES 1 à 29

Les copolymères (E) utilisés ont été :
- - E1 :: un copolymère d'éthylène (88% en moles), de propylène et de butène-1 ayant une densité de 0,897, un indice de fluidité de 0,63 dg/min., commercialisé par la société ECP-ENICHEM POLYMERES FRANCE S.A. sous la référence CLEARFLEX® FF D0 (anciennement NORSOFLEX® FW 1900).
- - E2 :: un copolymère d'éthylène (89% en moles) de propylène et de butène-1 ayant une densité de 0,910, un indice de fluidité de 0,9 dg/min., commercialisé par la société ECP-ENICHEM POLYMERES FRANCE S.A. sous la dénomination CLEARFLEX® FG BO (anciennement NORSOFLEX® FW 1600).

Les copolymères (P) utilisés, possédant tous une densité égale à 0,90, ont été :
- - P1 :: un copolymère statistique de propylène et d'éthylène, isotactique, ayant une température de fusion J égale à 140°C et un indice de fluidité égal à 1,8 dg/min., commercialisé sous la dénomination ELTEX® PKL 415.
- - P2 :: un copolymère statistique de propylène et d'éthylène, isotactique, ayant une température de fusion J égale à 134°C et un indice de fluidité égal à 5 dg/min., commercialisé sous la dénomination ELTEX® PKS 409.
- - P3 :: un copolymère statistique de propylène et d'éthylène, isotactique, ayant une température de fusion J égale à 134°C et un indice de fluidité égal à 8 dg/min., commercialisé sous la dénomination ELTEX® PKS 410.
- - P4 :: un copolymère à blocs de propylène et d'éthylène, isotactique, ayant une température de fusion J égale à 158°C et un indice de fluidité égal à 2 dg/min., commercialisé sous la dénomination ELTEX® PTL 220.
- - P5 :: un copolymère à blocs de propylène et d'éthylène, isotactique, ayant une température de fusion J égale à 159°C et un indice de fluidité égal à 6 dg/min., commercialisé sous la dénomination ELTEX® PRS 200.
- - P6 :: un copolymère à blocs de propylène et d'éthylène, isotactique, ayant une température de fusion J égale à 160°C et un indice de fluidité égal à 15 dg/min., commercialisé sous la dénomination ELTEX® PRW 210.
- - P7 :: (à titre comparatif) : un homopolymère isotactique du propylène ayant une température de fusion J de 170°C et un indice de fluidité égal à 6 dg/min.

Les compositions de copolymère (E) et de copolymère (P) ont été réalisés par mélange à sec des granulés respectifs selon les proportions pondérales indiquées au tableau I ci-après, puis extrusion du mélange à une température comprise entre 190 et 210°C et regranulation. Les granulés ainsi obtenus ont ensuite été transformés en films d'épaisseur égale à 50 micromètres par extrusion-soufflage de gaine sur extrudeuse DOLCI B 45 (vitesse de rotation de la vis : 60 t/min., température sortie-matière 225-230°C) à un taux de gonflage de 3.

Les films ainsi obtenus ont été soumis aux tests rappelés ci-dessus, dont les résultats figurent aux tableaux I et II ci-après.

La résistance à chaud des soudures indiquée dans le tableau I (RCSM) est la valeur maximale obtenue en fonction de la température de soudage du film sur lui-même ; la température à laquelle on obtient cette valeur RCSM est nommée ci-après : température optimale de soudage (Tₒₚₜ) et figure également au tableau I.

Pour des valeurs de températures inférieures et supérieures à Tₒₚₜ, on observe une diminution de la résistance à chaud des soudures ; on a fait également figurer au tableau I la gamme expérimentale des températures (Tm-TM) (encore appelée "plage ou fenêtre de soudabilité") pour laquelle la valeur observée pour la résistance à chaud des soudures est au moins égale à 80% de RCSM.

**TABLEAU I**

| Exemple | E | % | P | % | RCS_{M} | Tₒₚₜ °C | Tm °C - TM °C |
|---|---|---|---|---|---|---|---|
| 1 * | E1 | 100 | - | | 2,1 | 102 | 95-127 |
| 2 | E1 | 70 | P1 | 30 | 7,1 | 110 | 105-118 |
| 3 | E1 | 50 | P1 | 50 | 7,9 | 110 | 106-124 |
| 4 | E1 | 80 | P2 | 20 | 5,5 | 110 | 105-119 |
| 5 | E1 | 70 | P2 | 30 | 5,7 | 110 | 105-127 |
| 6 | E1 | 60 | P2 | 40 | 6,5 | 110 | 106-126 |
| 7 | E1 | 50 | P2 | 50 | 7,3 | 110 | 106-123 |
| 8 | E1 | 90 | P3 | 10 | 4,0 | 110 | 95-118 |
| 9 | E1 | 80 | P3 | 20 | 5,5 | 110 | 100-117 |
| 10 | E1 | 70 | P3 | 30 | 6,1 | 110 | 102-120 |
| 11 | E1 | 60 | P3 | 40 | 7,3 | 110 | 103-123 |
| 12 | E1 | 50 | P3 | 50 | 8,2 | 110 | 101-119 |
| 13 | E1 | 80 | P4 | 20 | 4,3 | 120 | 111-130 |
| 14 | E1 | 70 | P4 | 30 | 5,4 | 115 | 106-131 |
| 15 | E1 | 60 | P4 | 40 | 5,9 | 120 | 112-130 |
| 16 | E1 | 90 | P5 | 10 | 4,0 | 110 | 100-130 |
| 17 | E1 | 70 | P5 | 30 | 5,6 | 113 | 104-127 |
| 18 | E1 | 60 | P5 | 40 | 6,6 | 115 | 105-127 |
| 19 | E1 | 50 | P5 | 50 | 7,4 | 110 | 105-130 |
| 20 | E1 | 80 | P6 | 20 | 5,3 | 110 | 105-119 |
| 21 | E1 | 70 | P6 | 30 | 5,9 | 110 | 105-130 |
| 22 | E1 | 60 | P6 | 40 | 6,1 | 110 | 105->130 |
| 23 | E2 | 80 | P2 | 20 | 5,6 | 110 | 105-125 |
| 24 | E2 | 70 | P2 | 30 | 6,3 | 110 | 106-128 |
| 25 | E2 | 60 | P2 | 40 | 7,2 | 120 | 108-128 |
| 26 | E2 | 50 | P2 | 50 | 7,0 | 120 | 111-127 |
| 27 * | E1 | 80 | P7 | 20 | | 125 | |
| 28 * | - | | P3 | 100 | 4,6 | 128 | |
| 29 * | E2 | 100 | - | | 2,0 | 108 | |

| | | | | | | | |
|---|---|---|---|---|---|---|---|
| * Les exemples 1, 27, 28 et 29 sont donnés à titre comparatif. | | | | | | | |

**TABLEAU II**

| Exemple | RI | RD | |
|---|---|---|---|
| | | L | T |
| 1 * | 1000 | 242 | 345 |
| 8 | 880 | 400 | 425 |
| 9 | 747 | 487 | 483 |
| 10 | 540 | 433 | 479 |
| 11 | 380 | 425 | 449 |
| 12 | 340 | 410 | 440 |
| 28 * | 180 | 41 | 62 |

| | | | |
|---|---|---|---|
| * les exemples 1 et 28 sont donnés à titre comparatif. | | | |

## Revendications (Revendications pour l'(les) Etat(s) contractant(s) suivant(s): AT, BE, CH, LI, DE, DK, FR, GB, GR, IT, LU, NL, PT, SE)

1. Compositions transformables en films consistant en, d'une part, 50 à 93% en poids d'au moins un copolymère (E) d'éthylène et d'au moins une alpha-oléfine, ayant une densité comprise entre 0,880 et 0,940, et, d'autre part, 7 à 50% en poids d'au moins un copolymère cristallin (P) de propylène et d'éthylène, ayant une teneur en motifs dérivés du propylène d'au moins 80% en moles et un indice de fluidité (à 230°C, sous 2,16 kg) compris entre 1 et 20 dg/min.

2. Compositions selon la revendication 1, caractérisées en ce que la densité du copolymère (E) est comprise entre 0,885 et 0,930.

3. Compositions selon la revendication 1, caractérisées en ce que la densité du copolymère (E) est comprise entre 0,890 et 0,915.

4. Compositions selon l'une des revendications 1 à 3, caractérisées en ce que l'indice de fluidité standard du copolymère (P) est compris entre 3 et 20 dg/min.

5. Compositions selon l'une des revendications 1 à 3, caractérisées en ce que l'indice de fluidité standard du copolymère (P) est compris entre 6 et 16 dg/min.

6. Compositions selon l'une des revendications 1 à 5, caractérisées en ce que le point de fusion J du copolymère (P) est compris entre 130 et 150°C.

7. Compositions selon l'une des revendications 1 à 6, caractérisées en ce que le copolymère (P) est un copolymère isotactique statistique comprenant de 85% à 99% en moles de motifs propylène et de 1 à 15% en moles de motifs éthylène.

8. Films d'épaisseur comprise entre 20 et 200 micromètres, caractérisés en ce qu'ils comprennent au moins une composition selon l'une des revendications 1 à 7.

9. Films selon la revendication 8, caractérisés en ce que la valeur de leur résistance à chaud des soudures est au moins égale à 4 N/15 mm.

10. Films selon l'une des revendications 8 et 9, caractérisés en ce que leur température optimale de soudage est inférieure ou égale à 120°C.

11. Films selon l'une des revendications 8 à 10, caractérisés en ce que leur résistance à l'impact est d'au moins 300 g.

12. Films selon l'une des revendications 8 à 11, caractérisés en ce que leur résistance au déchirement est d'au moins 250 cN dans le sens longitudinal et d'au moins 400 cN dans le sens transversal.

## Revendications (Revendications pour l'(les) Etat(s) contractant(s) suivant(s): ES)

1. Procédé de préparation de compositions transformables en films, caractérisé par le fait que l'on mélange, par mélange de granulés ou de poudres, puis, le cas échéant, malaxage à l'état fondu de ce mélange, puis regranulation, d'une part, 50 à 93% en poids d'au moins un copolymère (E) d'éthylène et d'au moins une alpha-oléfine, ayant une densité comprise entre 0,880 et 0,940, et, d'autre part, 7 à 50% en poids d'au moins un copolymère cristallin (P) de propylène et d'éthylène, ayant une teneur en motifs dérivés du propylène d'au moins 80% en moles et un indice de fluidité (à 230°C, sous 2,16 kg) compris entre 1 et 20 dg/min.

2. Procédé selon la revendication 1, caractérisé en ce que la densité du copolymère (E) est comprise entre 0,885 et 0,930.

3. Procédé selon la revendication 1, caractérisé en ce que la densité du copolymère (E) est comprise entre 0,890 et 0,915.

4. Procédé selon l'une des revendications 1 à 3, caractérisé en ce que l'indice de fluidité standard du copolymère (P) est compris entre 3 et 20 dg/min.

5. Procédé selon l'une des revendications 1 à 3, caractérisé en ce que l'indice de fluidité standard du copolymère (P) est compris entre 6 et 16 dg/min.

6. Procédé selon l'une des revendications 1 à 5, caractérisé en ce que le point de fusion J du copolymère (P) est compris entre 130 et 150°C.

7. Procédé selon l'une des revendications 1 à 6, caractérisé en ce que le copolymère (P) est un copolymère isotactique statistique comprenant de 85% à 99% en moles de motifs propylène et de 1 à 15% en moles de motifs éthylène.

8. Films d'épaisseur comprise entre 20 et 200 micromètres, caractérisés en ce qu'ils comprennent au moins une composition consistant en, d'une part, 50 à 93% en poids d'au moins un copolymère (E) d'éthylène et d'au moins une alpha-oléfine, ayant une densité comprise entre 0,880 et 0,940, et, d'autre part, 7 à 50% en poids d'au moins un copolymère cristallin (P) de propylène et d'éthylène, ayant une teneur en motifs dérivés du propylène d'au moins 80% en moles et un indice de fluidité (à 230°C, sous 2,16 kg) compris entre 1 et 20 dg/min., la densité dudit copolymère (E) étant notamment comprise entre 0,885 et 0,930, l'indice de fluidité standard du copolymère (P) étant notamment compris entre 3 et 20 dg/min., le point de fusion J du copolymère (P) étant notamment compris entre 130 et 150°C, et le copolymère (P) étant notamment un copolymère isotactique statistique comprenant de 85% à 99% en moles de motifs propylène et de 1 à 15% en moles de motifs éthylène.

9. Films selon la revendication 8, caractérisés en ce que la valeur de leur résistance à chaud des soudures est au moins égale à 4 N/15 mm.

10. Films selon l'une des revendications 8 et 9, caractérisés en ce que leur température optimale de soudage est inférieure ou égale à 120°C.

11. Films selon l'une des revendications 8 à 10, caractérisés en ce que leur résistance à l'impact est d'au moins 300 g.

12. Films selon l'une des revendications 8 à 11, caractérisés en ce que leur résistance au déchirement est d'au moins 250 cN dans le sens longitudinal et d'au moins 400 cN dans le sens transversal.

## Patentansprüche (Patentansprüche für folgende(n) Vertragsstaat(en): AT, BE, CH, LI, DE, DK, FR, GB, GR, IT, LU, NL, PT, SE)

1. Zusammensetzungen, die zu Filmen verarbeitet werden können, bestehend einerseits aus 50 bis 93 Gew.% mindestens eines Copolymeren (E) aus Ethylen und mindestens einem Alpha-Olefin mit einer Dichte zwischen 0,880 und 0,940 und andererseits aus 7 bis 50 Gew.% mindestens eines kristallinen Copolymeren (P) aus Propylen und Ethylen mit einem Gehalt an von Propylen abgeleiteten Einheiten von mindestens 80 Mol% und einem Fluiditätsindex (bei 230°C, unter 2,16 kg) zwischen 1 und 20 dg/Min.

2. Zusammensetzungen gemäss Patentanspruch 1, dadurch gekennzeichnet, dass die Dichte des Copolymeren (E) zwischen 0,885 und 0,930 beträgt.

3. Zusammensetzungen gemäss Patentanspruch 1, dadurch gekennzeichnet, dass die Dichte des Copolymeren (E) zwischen 0,890 und 0,915 beträgt.

4. Zusammensetzungen gemäss einem der Patentansprüche 1 bis 3, dadurch gekennzeichnet, dass der Standard-Fluiditätsindex des Copolymeren (P) zwischen 3 und 20 dg/Min. beträgt.

5. Zusammensetzungen gemäss einem der Patentansprüche 1 bis 3, dadurch gekennzeichnet, dass der Standard-Fluiditätsindex des Copolymeren (P) zwischen 6 und 16 dg/Min. beträgt.

6. Zusaamensetzungen gemäss einem der Patentansprüche 1 bis 5, dadurch gekennzeichnet, dass der Schmelzpunkt J des Copolymeren (P) zwischen 130°C und 150°C beträgt.

7. Zusammensetzungen gemäss einem der Patentansprüche 1 bis 6, dadurch gekennzeichnet, dass das Copolymere (P) ein statistisch isotaktisches Copolymeres ist, welches von 85 bis 99 Mol% Propylen- Einheiten und von 1 bis 15 Mol% Ethylen-Einheiten enthält.

8. Filme mit einer Stärke zwischen 20 und 200 Mikrometern, dadurch gekennzeichnet, dass diese mindestens eine Zusammensetzung gemäss einem der Patentansprüche 1 bis 7 enthalten.

9. Filme gemäss Patentanspruch 8, dadurch gekennzeichnet, dass der Wert ihrer Hitzebeständigkeit der Schweißnähte mindestens gleich 4 N/15 mm beträgt.

10. Filme gemäss einem der Patentansprüche 8 und 9, dadurch gekennzeichnet, dass ihre optimale Schweisstemperatur weniger als oder gleich 120°C beträgt.

11. Filme gemäss einem der Patentansprüche 8 bis 10, dadurch gekennzeichnet, dass ihre Schlagfestigkeit mindestens 300 g beträgt.

12. Filme gemäss einem der Patentansprüche 8 bis 11, dadurch gekennzeichnet, dass ihr Reißfestigkeit mindestens 250 cN in der Längsrichtung und mindestens 400 cN in der Querrichtung beträgt.

## Patentansprüche (Patentansprüche für folgende(n) Vertragsstaat(en): SP)

1. Verfahren zur Herstellung von Zusammensetzungen, die zu Filmen verarbeitet werden können, dadurch gekennzeichnet, dass man durch Vermischen von Granulaten oder Pulvern, danach gegebenenfalls durch Kneten dieses Gemisches in geschmolzenem Zustand, danach durch erneute Granulierung einerseits 50 bis 93 Gew.% mindestens eines Copolymeren (E) aus Ethylen und mindestens einem Alpha-Olefin mit einer Dichte zwischen 0,880 und 0,940 und andererseits 7 bis 50 Gew.% mindestens eines kristallinen Copolymeren (P) aus Propylen und Ethylen mit einem Gehalt an von Propylen abgeleiteten Einheiten von mindestens 80 Mol% und einem Fluiditätsindex (bei 230°C, unter 2,16 kg) zwischen 1 und 20 dg/Min., miteinander vermischt.

2. Verfahren gemäss Patentanspruch 1, dadurch gekennzeichnet, dass die Dichte des Copolymeren (E) zwischen 0,885 und 0,930 beträgt.

3. Verfahren gemäss Patentanspruch 1, dadurch gekennzeichnet, dass die Dichte des Copolymeren (E) zwischen 0,890 und 0,915 beträgt.

4. Verfahren gemäss einem der Patentansprüche 1 bis 3, dadurch gekennzeichnet, dass der Standard-Fluiditätsindex des Copolymeren (P) zwischen 3 und 20 dg/Min. beträgt.

5. Verfahren gemäss einem der Patentansprüche 1 bis 3, dadurch gekennzeichnet, dass der Standard-Fluiditätsindex des Copolymeren (P) zwischen 6 und 16 dg/Min. beträgt.

6. Verfahren gemäss einem der Patentansprüche 1 bis 5, dadurch gekennzeichnet, dass der Schmelzpunkt J des Copolymeren (P) zwischen 130°C und 150°C beträgt.

7. Verfahren gemäss einem der Patentansprüche 1 bis 6, dadurch gekennzeichnet, dass das Copolymere (P) ein statistisch isotaktisches Copolymeres ist, welches von 85 bis 99 Mol% Propylen-Einheiten und von 1 bis 15 Mol% Ethylen-Einheiten enthält.

8. Filme mit einer Stärke zwischen 20 und 200 Mikrometern, dadurch gekennzeichnet, dass sie mindestens eine Zusammensetzung, bestehend einerseits aus 50 bis 93 Gew.% mindestens eines Copolymeren (E) aus Ethylen und mindestens einem Alpha-Olefin mit einer Dichte zwischen 0,880 und 0,940 und andererseits aus 7 bis 50 Gew.% mindestens eines kristallinen Copolymeren (P) aus Propylen und Ethylen mit einem Gehalt an von Propylen abgeleiteten Einheiten von mindestens 80 Mol% und einem Fluiditätsindex (bei 230°C, unter 2,16 kg) zwischen 1 und 20 dg/Min., enthalten, die Dichte dieses Copolymeren (E) im besonderen zwischen 0,885 und 0,930, der Standard-Fluiditätsindex des Copolymeren (P) im besonderen zwischen 3 und 20 dg/Min. und der Schmelzpunkt J des Copolymeren (P) im besonderen zwischen 130 und 150°C betragen und das Copolymere (P) im besonderen ein statistisch isotaktisches Copolymeres ist, welches von 85 bis 99 Mol% Propylen-Einheiten und von 1 bis 15 Mol% Ethylen-Einheiten enthält.

9. Filme gemäss Patentanspruch 8, dadurch gekennzeichnet, dass der Wert ihrer Hitzebeständigkeit der Schweißnähte mindestens gleich 4 N/15 mm beträgt.

10. Filme gemäss einem der Patentansprüche 8 und 9, dadurch gekennzeichnet, dass ihre optimale Schweisstemperatur weniger als oder gleich 120°C beträgt.

11. Filme gemäss einem der Patentansprüche 8 bis 10, dadurch gekennzeichnet, dass ihre Schlagfestigkeit mindestens 300 g beträgt.

12. Filme gemäss einem der Patentansprüche 8 bis 11, dadurch gekennzeichnet, dass ihr Reißfestigkeit mindestens 250 cN in der Längsrichtung und mindestens 400 cN in der Querrichtung beträgt.

## Claims (Claims for the following Contracting State(s): AT, BE, CH, LI, DE, DK, FR, GB, GR, IT, LU, NL, PT, SE)

1. Compositions capable of being converted into films, consisting of, on the one hand, 50 to 93% by weight of at least one copolymer (E) of ethylene and of at least one alpha-olefin, with a density of between 0.880 and 0.940 and, on the other hand, from 7 to 50 % by weight of at least one crystalline copolymer (P) of propylene and ethylene with a content of propylene-derived units of at least 80 mol% and a melt index (at 230°C, under 2.16 kg) of between 1 and 20 dg/min.

2. Compositions according to Claim 1, characterised in that the relative density of the copolymer (E) is between 0.885 and 0.930.

3. Compositions according to Claim 1, characterised in that the relative density of the copolymer (E) is between 0.890 and 0.915.

4. Compositions according to one cf Claims 1 to 3, characterised in that the standard melt index of the copolymer (P) is between 2 and 20 dg/min.

5. Compositions according to one of Claims 1 to 3, characterised in that the standard melt index of the copolymer (P) is between 6 and 16 dg/ruin.

6. Compositions according to one of Claims 1 to 5, characterised in that the melting point J of the copolymer (P) is between 130 and 150°C.

7. Compositions according to one of Claims 1 to 6, characterised in that the copolymer (P) is an isotactic, random copolymer containing from 85 to 99 mol% of propylene units and from 1 to 15 mol% of ethylene units.

8. Films with a thickness of between 20 and 200 micrometers, characterised in that they include at least one composition according to one of Claims 1 to 7.

9. Films according to Claim 8, characterised in that the value of their hot tack strength is at least 4 N/15 mm.

10. Films according to either of Claims 8 and 9, characterised in that their optimum sealing temperature is lower than or equal to 120°C.

11. Films according to one of Claims 8 to 10, characterised in that their impact strength is at least 300 g.

12. Films according to one of Claims 8 to 11, characterised in that their tear strength is at least 250 cN in the lengthwise direction and at least 400 cN in the transverse direction.

## Claims (Claims for the following Contracting State(s): SP)

1. Process for preparing compositions capable of being converted into films, characterised in that, on the one hand, 50 to 93% by weight of at least one copolymer (E) of ethylene and of at least one alpha-olefin, with a density of between 0.880 and 0.940, and, on the other hand, 7 to 50% by weight of at least one crystalline copolymer (P) of propylene and ethylene, with a content of propylene-derived units of at least 80 mol% and a melt index (at 230°C, under 2.16 kg) of between 1 and 20 dg/min, are mixed, by mixing granulates or powders and then, if appropriate, melt-blending this mixture, followed by regranulation.

2. Process according to Claim 1, characterised in that the relative density of the copolymer (E) is between 0.885 and 0.930.

3. Process according to Claim 1, characterised in that the relative density of the copolymer (E) is between 0.890 and 0.915.

4. Process according to one of Claims 1 to 3, characterised in that the standard melt index of the copolymer (P) is between 3 and 20 dg/min.

5. Process according to one of Claims 1 to 3, characterised in that the standard melt index of the copolymer (P) is between 6 and 16 dg/min.

6. Process according to one of Claims 1 to 5, characterised in that the melting point J of the copolymer (P) is between 130 and 150°C.

7. Process according to one of Claims 1 to 6, characterised in that the copolymer (P) is an isotactic, random copolymer containing from 85 to 99 mol% of propylene units and from 1 to 15 mol% of ethylene units.

8. Films with a thickness of between 20 and 200 micrometers, characterised in that they include at least one composition consisting of, on the one hand, 50 to 93% by weight of at least one copolymer (E) of ethylene and of at least one alpha-olefin, with a density of between 0.880 and 0.940, and, on the other hand, 7 to 50% by weight of at least one crystalline copolymer (P) of propylene and ethylene, with a content of propylene-derived units of at least 80 mol% and a melt index (at 230°C, under 2.16 kg) of between 1 and 20 dg/min, the relative density of said copolymer (E) being especially between 0.885 and 0.930, the standard melt index of the copolymer (P) being especially between 3 and 20 dg/min, the melting point J of the copolymer (P) being especially between 130 and 150°C, and the copolymer (P) being especially a random isotactic copolymer comprising from 85 to 99 mol% of propylene units and from 1 to 15 mol% of ethylene units.

9. Films according to Claim 8, characterised in that the value of their hot tack strength is a least 4 N/15 mm.

10. Films according to either of Claims 8 and 9, characterised in that their optimum sealing temperature is lower than or equal to 120°C.

11. Films according to one of Claims 8 to 10, characterised in that their impact strength is at least 300 g.

12. Film according to one of Claims 8 to 11, characterised in that their tear strength is at least 250 cN in the lengthwise direction and at least 400 cN in the transverse direction.
